# EUROPÄISCHE PATENTSCHRIFT

(11) **EP 0 874 133 B1**
(45) Veröffentlichungstag und Bekanntmachung des Hinweises auf die Patenterteilung: **28.05.2003**
(21) Anmeldenummer: 98810324.8
(22) Anmeldetag: 15.04.1998
(51) Int. Cl.: F01D 11/12, G01B 21/16, F01D 21/04

(54) **Vorrichtung und Verfahren zur Messung des Abriebs einer Anlaufschicht zwischen rotierenden und stationären Teilen einer Turbine**
Device and method to indicate the wear of an abradable layer between rotating and stationary parts of a turbine
Dispositif et méthode d'indication d'usure d'une couche abradable entre des éléments rotatifs et statoriques d'une turbine

(30) Priorität: 26.04.1997 DE 19717816
(43) Veröffentlichungstag der Anmeldung: 28.10.1998
(73) Patentinhaber: ALSTOM (Switzerland) Ltd, 5401 Baden (CH)
(72) Erfinder: Nguyen, Uy-Liem, Dr., 5405 Baden (CH)

(56) Entgegenhaltungen:
- EP-A- 0 385 569
- DE-A- 4 315 125
- DE-B- 1 271 122
- FR-A- 2 703 401
- US-A- 5 440 395

## Beschreibung

### Technisches Gebiet

Die Erfindung betrifft eine Vorrichtung zur Messung eines Abstandes zwischen rotierenden und stationären Teilen einer Turbine nach dem Oberbegriff des ersten Anspruches.

Sie betrifft ebenfalls ein Verfahren zur Messung eines Abstandes zwischen rotierenden und stationären Teilen einer Turbine nach dem Oberbegriff des unabhängigen Verfahrensanspruches.

### Stand der Technik

Aus der DE 35 34 641 A1 ist ein Belag für Hochtemperatur-Turbinendichtungen bekannt. Dieser Belag ist dem Schaufelblattkopf zugekehrt auf der Innenseite des Gehäuses durch thermisches Spritzen aufgebracht und kann aus mehreren Schichten bestehen. Der Belag ist so ausgelegt, dass der auf der Innenseite des Gehäuses auf dem Belag streifende Schaufelblattkopf keinen Schaden nimmt, d.h. der Belag weist eine geringere Härte auf als der Schaufelblattkopf. Durch diesen abriebtoleranten Belag soll die Spalte zwischen Schaufelblattkopf und Gehäuse möglichst klein gehalten werden, ohne das Gefahr besteht, dass die Schaufel beschädigt wird.

Eine Ueberprüfung ob der Schaufelblattkopf den Belag berührt und welche Schichten des Belages abgerieben werden ist jedoch nur möglich, wenn die Turbine abgeschaltet und das Gehäuse geöffnet wird. DE 1 271 122 offenbart die Anordnung von radioaktiven Material auf einem Schaufelblattkopf einer Dampfturbine, und die Anordnung eines Geigenzählers in den Dampfleitungen. Dies ermöglicht es zwar im Betrieb ein Anstreifenfastzustellen, erlaubt aber keine Quantifizierung des Ausmasses des Anstreifereignisses oder des verbleibenden Abstande zum Gehaüse.

### Darstellung der Erfindung

Der Erfindung liegt die Aufgabe zugrunde, bei einer Vorrichtung und einem Verfahren zur Messung eines Abstandes zwischen rotierenden und stationären Teilen einer Turbine der eingangs genannten Art eine Messung des Abstandes zwischen dem rotierenden Teil und der Innenseite des Gehäuses der Turbine während dem Betrieb, insbesondere beim Anfahren der Turbine zu ermöglichen.

Erfindungsgemäss wird dies durch die Merkmale des ersten Anspruches erreicht.

Kern der Erfindung ist es also, dass in der abriebtoleranten Schicht mindestens ein Indikator angeordnet ist.

Die Vorteile der Erfindung sind unter anderem darin zu sehen, dass durch den Indikator und einen Detektor und Analysator festgestellt werden kann, wann und wo der Kopf des rotierenden Körpers die Innenseite des Gehäuses berührt.

Es ist besonders zweckmässig, wenn in verschiedenen, sich in Strömungsrichtung folgenden Schichten unterschiedliche Indikatoren angeordnet werden. Dadurch können mit dem Detektor und Analysator verschiedene Bereiche der Turbine überprüft werden. Durch die Anbringung mehrerer, in radialer Richtung übereinanderliegender Schichten mit unterschiedlichen Indikatoren kann der Abstand zwischen dem Kopf des rotierenden Körpers und des stationären Gehäuses genau bestimmt werden.

Weitere vorteilhafte Ausgestaltungen der Erfindung ergeben sich aus den Unteransprüchen.

### Kurze Beschreibung der Zeichnung

In den Zeichnungen ist ein Ausführungsbeispiel der Erfindung dargestellt. Es zeigen:
- Fig. 1: einen Teillängsschnitt durch eine Turbine;
- Fig. 2: einen vergrösserten Ausschnitt aus Fig. 1.

Es sind nur die für das Verständnis der Erfindung wesentlichen Elemente gezeigt.

### Weg zur Ausführung der Erfindung

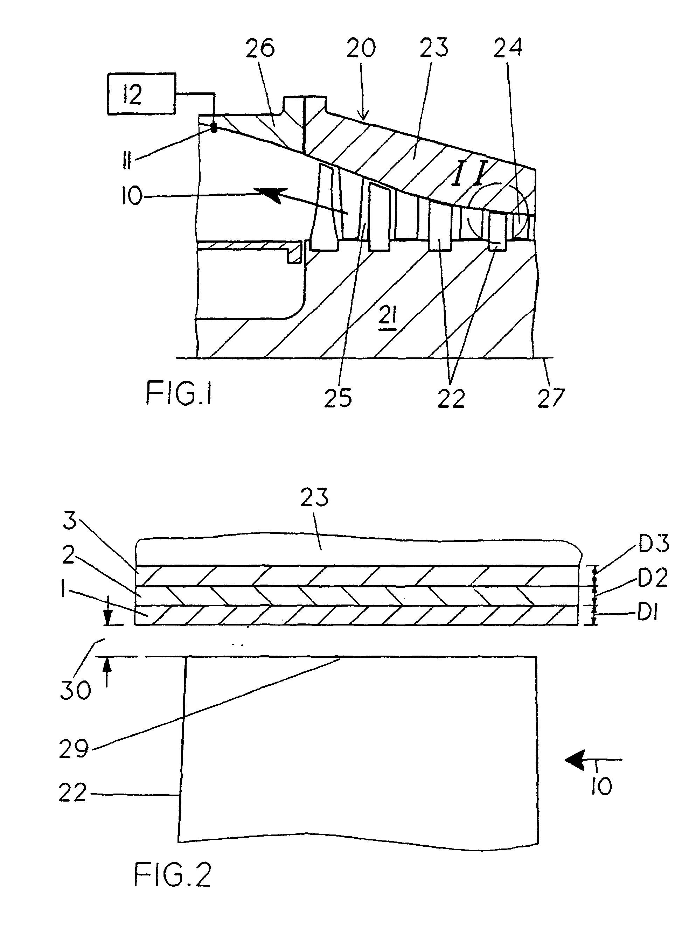

Nach Fig. 1 besteht eine Turbine 20 im wesentlichen aus einem Rotor 21, der mit Laufschaufeln 22 beschaufelt ist, und einem Turbinengehäuse 23, in das Leitschaufeln 24 eingehängt sind. Durch das Gehäuse 23 und den Rotor 21 wird ein im wesentlichen ringförmiger Kanal 25 gebildet, durch den ein energiereiches gasförmiges Medium 10 geleitet wird. Die Energie des durch den Kanal 25 gefeiteten Mediums wird an die Laufschaufeln 22 abgegeben, wodurch sich der Rotor 21 um seine Drehachse 27 zu drehen beginnt. Die Energie des gasförmiges Mediums wird somit in Drehenergie umgewandelt, die beispielsweise an einen nicht dargestellten Generator abgegeben werden kann. Das entspannte gasförmiges Medium 10 wird über ein am Gehäuse 23 angeflanschtes Abgasgehäuse 26 abgeleitet. im Abgasgehäuse 26 ist ein Detektor 11 angeordnet, der mit einem Analysator 12 verbunden ist.

Nach Fig. 2 ist auf der Innenseite des Gehäuses 23 ein Belag mit mehreren Schichten 1, 2 und 3 mit einer Schichtdicke D1, D2 und D3 angeordnet. Die Schichten bestehen aus einem Grundwerkstoff, dessen Härte geringer als diejenige des Schaufelblattkopfes ist. Die Schichten 1, 2 und 3 weisen eine jeweils veränderte chemische Zusammensetzung auf. Diese unterschiedliche Zusammensetzung ist zumindest durch spezifische Indikatoren gegeben, d.h. chemische Verbindungen, die in dem Grundwerkstoff der Schichten eingelagert sind. Die Schichten 1, 2, und 3 können somit den gleichen Grundwerkstoff aufweisen, jedoch mit unterschiedlichen Indikatoren versetzt sein.

Die Laufschaufel 22, bzw. ihr zugehöriger Schaufelblattkopf 29 ist in einem Spaltabstand 30 von der ersten Schicht angeordnet. Bei Betrieb der Turbine 20, insbesondere in den Transienten, erwärmt sich die Schaufel und der Abstand 30 verkleinert sich, bis der Schaufelkopf die erste Schicht 1 berührt und abreibt. Die Abriebpartikel werden in Strömungsrichtung des gasförmigen Mediums transportiert. Mittels eines, in Fig. 1 dargestelltem Detektors am Abgasgehäuse und eines mit dem Detektor verbundenen Analysators 12 kann die Zusammensetzung der aus der Turbine austretenden Gase und Teilchen analysiert werden. Durch die Messung und Detektion der unterschiedlichen Indikatoren kann bestimmt werden, welche Schicht gerade abgetragen wird. Die Indikatoren können von Schaufelreihe zu Schaufelreihe variiert werden, wodurch exakt bestimmt werden kann, welche Schaufelreihe welche Schicht zu welchem Zeitpunkt abträgt.

Selbstverständlich ist die Erfindung nicht auf das gezeigte und beschriebene Ausführungsbeispiel beschränkt. Sie kann bei allen beweglichen Teilen angewendet werden, um den gegenseitigen Abstand der Teile zu messen. Beispielsweise bei Schaufeln von Verdichtern, bei Dichtstreifen von Labyrinthdichtung usw..

### Bezugszeichenliste

- 1: erste Schicht
- 2: zweite Schicht
- 3: dritte Schicht
- 10: gasförmiges Medium
- 11: Detektor
- 12: Analysator
- 20: Turbine
- 21: Rotor
- 22: Laufschaufel
- 23: Gehäuse
- 24: Leitschaufel
- 25: Kanal
- 26: Abgasgehäuse
- 27: Drehachse Rotor
- 29: Schaufelblattkopf
- 30: Spaltabstand 22 zu 1
- D1: Schichtdicke 1
- D2: Schichtdicke 2
- D3: Schichtdicke 3

## Patentansprüche

1. Vorrichtung zur Messung des Abstandes zwischen den Köpfen (29) von rotierenden , auf einem Rotor (21) einer Turbine (20) angeordneten Körpern (22) und der Innenseite eines den rotierenden Körper umschliessenden Gehäuses (23) der Turbine, umfassend einen Detektor (11) mit einem Analysator (12) und wenigstens eine gegenüberliegend des Kopfes (29) am Gehäuse angeordnete abriebtolerante Schicht (1, 2, 3), **dadurch gekennzeichnet, dass** die Vorrichtung unterschiedliche in radialer Richtung aufeinanderfolgende und/oder in Strömungsrichtung an verschiedenen Reihen von rotierenden Körpern angeordnete Schichten aufweist, in welche spezifische von dem Detektor und dem Analysator unterscheidbare Indikatoren eingebettet sind.

2. Vorrichtung nach Anspruch 1, **dadurch gekennzeichnet dass** an verschiedenen Reihen in Strömungsrichtung angeordneter rotierender Körper Schichten oder radiale Schichtenfolgen mit unterschiedlichen Indikatoren angeordnet sind.

3. Vorrichtung nach einem der vorstehenden Ansprüche, **dadurch gekennzeichnet, dass** der rotierende Körper eine Laufschaufel (22) ist.

4. Vorrichtung nach einem der Ansprüche 1 oder 2, **dadurch gekennzeichnet, dass** der rotierende Körper ein Dichtstreifen einer Labyrinthdichtung ist.

5. Verfahren zur Messung des Abstandes zwischen den Köpfen (29) von rotierenden, auf einem Rotor (21) einer Turbine (20) angeordneten Körpern (22) und der Innenseite eines den rotierenden Körper umschliessenden Gehäuses (23) der Turbine, **dadurch gekennzeichnet, dass** beim Anstreifen eines Kopfes an der abriebtoleranten Schicht durch einen Detektor (11) und einen Analysator (12) die Indikatoren in aus gegenüberliegend des Kopfes in radialer Richtung aufeinanderfolgend und/oder an verschiedenen Positionen in Strömungsrichtung angeordneten Schichten mit spezifischen eingebetteten Indikatoren stammenden Abriebpartikel spezifiziert und dem Ort eines Anstreifereignisses zugeordnet werden, woraus der Abstand zwischen dem Gehäuse (23) und dem Kopf (29) ermittelt wird.

6. Verfahren nach Anspruch 5, **dadurch gekennzeichnet, dass** die Messung während des Betriebs der Turbine erfolgt.

7. Verfahren nach einem der Ansprüche 5 oder 6, **dadurch gekennzeichnet, dass** ein Anstreifereignis lokalisiert wird.

## Claims

1. Arrangement for measuring the distance between the tips (29) of rotating bodies (22), which are arranged on a rotor (21) of a turbine (20), and the inside of a casing (23), which encloses the rotating body, of the turbine, comprising a detector (11) with an analyser (12) and at least one abrasion-tolerant layer (1, 2, 3) arranged opposite the tip (29) on the casing, **characterized in that** the arrangement has different layers which follow one another in the radial direction and/or are arranged in the direction of flow on various rows of rotating bodies and in which specific indicators which can be distinguished by the detector and the analyser are embedded.

2. Arrangement according to Claim 1, **characterized in that** layers or radial series of layers with different indicators are arranged on various rows of rotating bodies arranged in the direction of flow.

3. Arrangement according to one of the previous claims, **characterized in that** the rotating body is a moving blade (22).

4. Arrangement according to either of Claims 1 and 2, **characterized in that** the rotating body is a sealing strip of a labyrinth seal.

5. Method of measuring the distance between the tips (29) of rotating bodies (22), which are arranged on a rotor (21) of a turbine (20), and the inside of a casing (23), which encloses the rotating body, of the turbine, **characterized in that**, during grazing of a tip on the abrasion-tolerant layer, the indicators in abrasion particles originating from layers arranged opposite the tip such as to follow one another in the radial direction and/or at various positions in the direction of flow and having specific embedded indicators are specified by a detector (11) and an analyser (12) and assigned to the location where grazing occurs, from which the distance between the casing (23) and the tip (29) is determined.

6. Method according to Claim 5, **characterized in that** the measurement is effected during operation of the turbine.

7. Method according to either of Claims 5 and 6, **characterized in that** occurrence of grazing is localized.

## Revendications

1. Dispositif de mesure de la distance entre les têtes (29) de corps rotatifs (22) disposés sur un rotor (21) d'une turbine (20) et le côté intérieur d'un carter (23) entourant les corps rotatifs, comprenant un détecteur (11) avec un analyseur (12) et au moins une couche tolérant l'abrasion (1, 2, 3) disposée en regard de la tête (29) sur le carter, **caractérisé en ce que** le dispositif présente des couches différentes se suivant dans la direction radiale et/ou disposées dans la direction de l'écoulement sur différentes rangées de corps rotatifs, dans lesquelles sont encastrés des indicateurs différentiables du détecteur et de l'analyseur.

2. Dispositif selon la revendication 1, **caractérisé en ce que** des couches ou des successions de couches radiales sont disposées avec des indicateurs différents sur différentes rangées de corps rotatifs disposés dans la direction de l'écoulement.

3. Dispositif selon l'une quelconque des revendications précédentes, **caractérisé en ce que** le corps rotatif est une aube mobile (22).

4. Dispositif selon l'une quelconque des revendications 1 ou 2, **caractérisé en ce que** le corps rotatif est une bande d'étanchéité ou un joint à labyrinthe.

5. Procédé de mesure de la distance entre les têtes (29) de corps rotatifs (22) disposés sur un rotor (21) d'une turbine (20) et le côté intérieur d'un carter (23) entourant les corps rotatifs, **caractérisé en ce que** lors du contact d'une tête sur la couche tolérant l'abrasion par un détecteur (11) et un analyseur (12), les indicateurs sont spécifiés, dans des particules d'abrasion provenant de couches successives en regard de la tête dans la direction radiale et/ou disposées dans différentes positions dans la direction d'écoulement, avec des indicateurs encastrés spécifiques, et sont associés au point d'un évènement de contact, ce par quoi la distance entre le carter (23) et la tête (29) est détectée.

6. Procédé selon la revendication 5, **caractérisé en ce que** la mesure s'effectue au cours du fonctionnement de la turbine.

7. Procédé selon l'une quelconque des revendications 5 ou 6, **caractérisé en ce qu'**un événement de contact est localisé.
